# EUROPEAN PATENT APPLICATION

(11) **EP 2 361 676 A1**
(43) Date of publication of application: **31.08.2011**
(21) Application number: 10195629.0
(22) Date of filing: 17.12.2010
(51) Int. Cl.: B01J 3/04, C07C 51/02, C11B 13/00

(54) **Process and apparatus for neutralizing tall oil soap**

(30) Priority: 18.12.2009 FI 20096366
(71) Applicant: Linde AG, 80331 München (DE)
(72) Inventor: Leino, Hannu, 02320, Espoo (FI)

(57) **Abstract**

The invention relates to a process and apparatus for neutralizing tall oil soap. In the process, tall oil soap, water and carbon dioxide is fed into a reactor. The reaction provides a mixture of soap oil and aqueous bicarbonate brine. The mixture is discharged and separate. The partial pressure of carbon dioxide in the gas phase of the reactor is controlled during the reaction. The apparatus comprises a reactor (1) with inlet means (2, 3, 4) for tall oil soap, water and carbon dioxide and outlet means (5) for the discharge of a mixture of soap oil and bicarbonate brine. The reactor (1) is provided with means (7) for controlling the partial pressure of carbon dioxide in the head space (15) of the reactor (1). The invention provides improvements in the production of soap oil and in the recovery of useful products from black liquor.

## Description

### FIELD OF THE INVENTION

The present invention relates to a process for neutralizing tall oil soap and to an apparatus for use in the process. The invention also relates to the use of partial pressure control in the neutralization process.

The aim of the invention is to provide improvements in the production of soap oil and ultimately in the production of tall oil and the recovery of useful chemicals form black liquor. According to the invention, soap oil is produced by neutralization of tall oil soap with carbon dioxide. The resulting soap oil is separated from the bicarbonate brine and then optionally acidulated with a strong acid to free the tall oil. The improvement according the invention relates specifically to the maintaining of an efficient partial pressure of the carbon dioxide in the gas phase of the reactor. This is done by controlled removal of released gases collected in the gas phase of the reactor.

### BACKGROUND OF THE INVENTION

Tall oil soap is produced as a byproduct in the digestion of wood chips in the sulfate (Kraft) pulping process. The spent digestion liquor or "black liquor" contains sodium soaps of resin acids and fatty acids (tall oil) as well as some neutral or unsaponifiable components.

Crude tall oil soap is skimmed off the top of concentrated black liquor. The tall oil soap generally has a pH between 10 and 13, usually close to 12 and it still contains about 40 to 50 % black liquor. The separated tall oil soap is traditionally acidulated with sulfuric acid to a pH of about 2 to 4 at which pH the sodium soaps of the tall oil fatty acids are released and can be separated from the aqueous brine-acid phase. The free tall oil can be used to provide a number of different chemicals for various industrial applications.

The sulfuric acid, which is traditionally used in the acidulation, increases the sulfur input and distorts the sulfur balance in a pulp mill. In order to reduce the sulfur input in the tall oil soap acidulation, it is known in the art that part of the sulfuric acid can be replaced with carbon dioxide. There are a number of patent documents relating to such processes.

Thus, for instance US patent 3,901,869 (Westvaco) describes the neutralization of tall oil soap with carbon dioxide and water to a pH of 7 to 8. The resulting soap oil phase is separated from the aqueous bicarbonate brine phase and is then further acidulated with sulfuric acid to free the tall oil.

US Patent 4,495,095 (Union Camp) discloses acidulation of tall oil soap with carbon dioxide under a pressure at which the carbon dioxide is in a supercritical state.

US Patent 5,286,845 (Union Camp) teaches neutralization of tall oil soap with carbon dioxide under pressure and separation of the resulting soap oil and bicarbonate brine also under pressure. Substantial savings in the use of sulfuric acid for the final acidulation are provided.

WO 95/23837 (Metsäbotnia) discloses a carbon dioxide neutralization of tall oil soap wherein an extra neutralization with sulfuric acid is performed before the separation of the bicarbonate brine and the neutralized soap oil. The final acidulation to free the tall oil is performed with sulfuric acid.

WO 94/11571 (LT-Dynamics Oy) discloses a process for the neutralization of tall oil soap with sodium bisulfite before a final acidulation with sulfuric acid. The bisulfite solution may be provided by absorbing sulfur dioxide into an alkaline sodium solution.

WO 96/34932 (Oy Polargas Ab) discloses a process for improving the water separation in a carbon dioxide neutralization of tall oil soap. After the neutralization but before the cooking with sulfuric acid, the pH is adjusted with an acidically reacting compound such as bisulfite.

WO 98/29524 (AGA AB) discloses cleaning of crude tall oil soap with carbon dioxide to remove lignin impurities prior to neutralization with carbon dioxide and/or sulfuric acid.

WO 99/29813 (Oy Polargas Ab) discloses a process wherein tall oil soap is neutralized with carbon dioxide and the resulting soap oil is heated in an intermediate step to 60 to 100 °C in order to release gases prior to adding sulfuric acid to the soap oil for cooking the soap oil in a standard manner to free tall oil.

EP 1 870 445 (Linde AG) discloses a process for improving the acidulation of soap oil which has been provided by neutralization with carbon dioxide. The acidulation reaction between soap oil and sulfuric acid is improved by raising the temperature above 100 °C.

WO 03/031545 (Linde AG) teaches improving the separation of soap oil by adding a density increasing compound to the aqueous brine phase.

It should be noted that all documents cited in this text ("herein cited documents") as well as each document or reference cited in each of the herein-cited documents, and all manufacturer's literature, specifications, instructions, product data sheets, material data sheets, and the like, as to the products and processes mentioned in this text, should be considered part of the knowledge of the skilled person. The documents are hereby expressly incorporated herein by reference.

The above mentioned prior art discloses the use of carbon dioxide, bisulfite or other acidically reacting compound(s) in the pre-treatment of tall oil soap to produce an intermediate neutralized product having a pH of about 6 to 8.5, typically about 7 to 8. This pretreatment reduces the amount of sulfuric acid required for the final acidulation step in the production of tall oil by as much as 40 to 80% or more. Thus, this pre-treatment or neutralization step is highly advantageous in reducing the sulfur load in a pulp mill.

The prior art processes have been performed at atmospheric pressure or at a pressure above the atmospheric pressure (overpressure). Some inventors have noted that the process proceeds better at an overpressure. Some have performed the soap oil separation at the same pressure as the neutralization reaction. However, none of the prior art documents discusses the importance of maintaining a sufficient partial pressure of the carbon dioxide in the reactor.

It is an object of the present invention to improve the operation of the prior art processes for the neutralization of tall oil soap.

The present inventor has realized that it is not sufficient to maintain an overpressure in the reactor. Rather, it is important to maintain a sufficient carbon dioxide partial pressure in the reactor. By ascertaining that the proportion of the reactive neutralizing gas remains at a sufficiently high level in the reactor, significant improvements to the neutralization process can be obtained.

### SUMMARY OF THE INVENTION

In connection with the present invention, it was surprisingly found that the neutralization of tall oil soap with carbon dioxide in a continuously operated process can be significantly improved and the problems of many prior art processes can be overcome by introducing into the process a step of controlling the partial pressure of carbon dioxide in the reactor.

The characteristics of the present invention are defined in the appended claims.

The process according to the invention for continuous neutralization of tall oil soap comprises the steps of
a) feeding tall oil soap, water and carbon dioxide into a reactor;
b) causing a reaction between said soap, carbon dioxide and water to provide a mixture of soap oil and aqueous bicarbonate brine,
c) during said reaction, controlling the partial pressure of carbon dioxide in the gas phase of said reactor; and
d) discharging said mixture of soap oil and brine from said reactor.

The controlling of the carbon dioxide partial pressure counter-acts the effect of the accumulation of gases other than carbon dioxide in the gas phase of the reactor. In an embodiment of the invention, the controlling of the partial pressure comprises removal of gases from the gas phase of the reactor. The removal of gases may be performed in a continuous and/or intermittent manner. The removal is performed in a controlled manner to provide the desired rise in partial pressure of carbon dioxide without unduly removing reactive gas from the gas phase.

In an embodiment of the invention, the controlling of the partial pressure comprises monitoring the concentration of carbon dioxide in the gas phase of the reactor. It is also possible to control the concentration of another gas in the gas phase. The presence of significant amounts of other gases indicates a lowered concentration of carbon dioxide.

The mixture of soap oil and bicarbonate brine produced in the neutralization reaction is discharged from the reactor and transferred to a separator in which brine is separated from soap oil. In an embodiment of the invention, the partial pressure of carbon dioxide in the separator is maintained at the same level as in the reactor.

The invention also relates to an apparatus for the continuous neutralization of tall oil soap, comprising
(i) a reactor with means for maintaining a pressure
(ii) the reactor having controlled inlet means for tall oil soap, water and carbon dioxide, outlet means for the discharge of a mixture of soap oil and bicarbonate brine and mixing means, and
(iii) the reactor being provided with means for controlling the partial pressure of carbon dioxide in the head space of the reactor.

In an embodiment of the invention the means for controlling the partial pressure comprises a controlled outlet for the removal of gases from the head space of the reactor.

The reactor is typically connected to a separator. In an embodiment of the invention the separator head space is in gas contact with the reactor head space. This balances the gas composition in the reactor and separator so that the partial pressure of carbon dioxide is at the same level in both.

The invention also relates to the use of partial pressure control in a process for neutralizing tall oil soap with carbon dioxide.

### BRIEF DESCRITPITON OF THE DRAWING

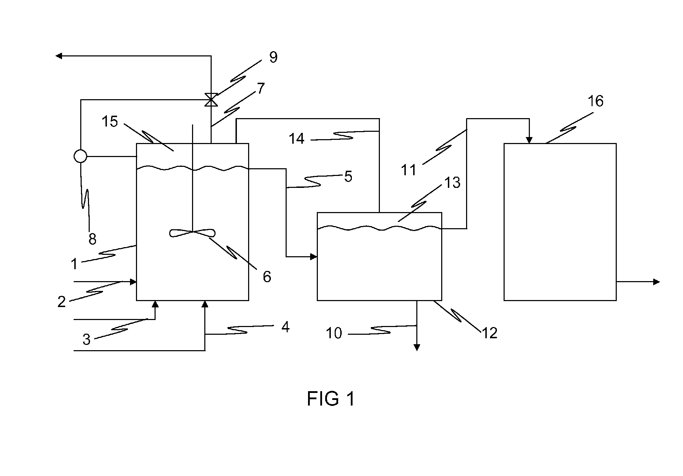

Fig. 1 shows a diagrammatic presentation of a neutralization process according to the invention.

### DETAILED DESCRIPTION OF THE INVENTION

In the neutralization of tall oil soap with carbon dioxide, the main reaction taking place comprises the acidification/neutralization of the sodium salts of the soap constituents according to the following equation:

RCOONa + CO₂ + H₂O 〉̶ RCOOH + NaHCO₃

However, also other reactions occur, since the soap contains a large number of various organic compounds which are affected by the change in pH and by the heat in the reactor. During the reaction various gases other than carbon dioxide enter the gas phase of the reactor. Such gases typically include malodorous gases such as hydrogen sulfide, methyl and dimethyl mercaptanes and dimethyldisulfide. Oxygen and inert gases such as nitrogen may enter the reactor with the carbon dioxide flow.

The gases other than carbon dioxide are inactive in the neutralization process. They are released from the reaction liquid in the conditions prevailing in the reactor and enter the gas phase of the reactor. In a continuous process these gases accumulate and fill up the gas phase of the reactor with non-neutralizing gases. As more and more gases are released and only carbon dioxide is consumed in the reaction, the proportion of carbon dioxide in the gas phase, i.e. the partial pressure of carbon dioxide diminishes.

In the prior art continuous processes, the operation includes removal of the continuously fed soap, water and carbon dioxide in the form of a mixture of soap oil and bicarbonate brine. However, the gases other than carbon dioxide, which are introduced and/or released, are not removed. In a typical operation of a prior art process, the batch type reaction will operate quite nicely, because there is no time for excess accumulation of gases. However, when the operation is changed into a continuous one, there will be problems. The neutralization will often start quite nicely as carbon dioxide feeding is started. Then, after a while the reaction will slow down. Increasing the pressure will increase the reaction but only for a while. Despite increased pressure, the neutralization just does not proceed as desired.

The poor functioning of many industrial scale continuous carbon dioxide neutralization processes has been a great problem for the practitioners. The present invention provides a solution to the problem.

The present invention shows that the key to the proper functioning of the reaction lies in the partial pressure of carbon dioxide. When there is sufficient carbon dioxide in the gas phase of the reactor, the reaction will proceed.

According to an embodiment of the invention, the partial pressure of carbon dioxide is increased by removing gases from the gas phase of the reactor. Any removal of gases will entail removal of carbon dioxide also, since carbon dioxide is continuously fed into the reactor and carbon dioxide accumulates in the reactor gas phase in proportion to its partial pressure. Considering that carbon dioxide is the specific neutralization reagent added to the reactor, removal of carbon dioxide is contrary to the desired object of the reaction. Controlling the partial pressure by removal of gaseous carbon dioxide from the reactor is thus not an obvious measure for the practitioner.

The present invention is based on the realization that it is necessary to control, not the total gas pressure in the reactor, but specifically the partial pressure of carbon dioxide. By removal of the accumulated gases, the partial pressure of carbon dioxide can be maintained at a high level. The fact that some carbon dioxide is also removed at the same time as the non-desired gases, is a minor problem. Carbon dioxide is fed as a reagent into the reactor and as long as the gas introduced as carbon dioxide feed has a higher content of carbon dioxide than the gas removed, the carbon dioxide partial pressure will be increased as accumulated gases are removed.

The invention will be described in the following with reference to the drawing. It is obvious to the skilled person that the invention may be modified in many ways and that the invention is not limited to the specific embodiment described in the following illustrative description.

Fig. 1 shows a neutralization reactor 1 having in its lower region an inlet means 2 for soap and an inlet means 3 for reaction water. The feeding of soap and water may be individually controlled. The soap and water feeds may be combined and/or mixed prior to their introduction into the reactor.

At the bottom of the reactor 1 there is an inlet means 4 for carbon dioxide. The carbon dioxide is preferably introduced in gaseous form. However, the carbon dioxide may also be combined with water prior to the introduction into the reactor. Adding the carbon dioxide in solid form is also possible, although continuous feeding of the solid is complicated. In order to distribute the carbon dioxide uniformly in the reaction mixture, it is advantageous to add it in gaseous form finely distributed, e.g. through a sparger. A mixing means 6 in the reactor improves the contact between the reacting partners.

In an industrial process, carbon dioxide is typically fed into the reactor and/or into the water which is fed into the reactor in the form of industrial carbon dioxide. Industrial carbon dioxide gas typically contains more than 95 %, and typically 99% or more carbon dioxide by volume. The carbon dioxide may also be fed in the form of an industrial or municipal carbon dioxide rich gas, such as gas derived from fermentation or other biodegradation processes, or in the form of a flue gas from the combustion of fuels. Flue gases typically contain up to 15 or 20 % carbon dioxide. In the papermaking industry a suitable gas for use in the present process is provided by the flue gas from the lime kilns. Such lime kiln gases typically contain from 20 to 30% carbon dioxide. In case waste or flue gases with a low carbon dioxide content are used, it is advantageous to use a mixture of such a gas with industrial carbon dioxide to proved an efficient reaction in the reactor. Preferably, the carbon dioxide rich gas used as feed should contain more 6han 25 % carbon dioxide.

In contrast to the processes of the prior art, it is possible in the operation of the present invention to utilize low grade or waste gases with a relatively low carbon dioxide content since the non-reactive gases, which would disturb a prior art process, are removed from the reactor. Since carbon dioxide is bound in the process of the invention, the present invention can be used as an effective carbon dioxide sink, not only for industrial carbon dioxide but also for waste and fuel gases.

The reactor 1 is a pressurized reactor and an overpressure, i.e. a pressure above atmospheric pressure, is typically maintained during the reaction. The overpressure should be more than 0.2 bar. In an embodiment of the invention, the overpressure is between 0.5 and 10 bar. In most cases an overpressure of between 1 and 5 bar is sufficient and has been found to provide suitable conditions for the reaction and for the removal of gases.

The reactor 1 may be heated by any means known to those skilled in the art, such as by a heating jacket or by electric means. However, an expedient way of heating comprises the feeding of steam directly into the reactor. The temperature of the neutralization reaction is typically between 40 and 60 °C although temperatures as high as 85 °C or more may be employed. The temperature is most typically between 45 and 55 °C.

Typically the various feeds as well as the heat and pressure are controlled by a computer according to certain set and adjustable values.

The tall oil soap fed in to the reactor typically comprises crude tall oil soap with a pH of about 10-13. However, the soap may also be pretreated and purified before introduction into the reactor.

The neutralization reaction proceeds with carbon dioxide and water by forming a mixture of sodium bicarbonate brine and soap oil. When the pH reaches a value between about pH 8.5 and 6.5, typically between pH 8 and 7, the soap oil/bicarbonate brine emulsion reaches a point where the emulsion is ready for "breaking", i.e. separation into two phases. At this point, the mixture of soap oil and bicarbonate brine has reached the top part of the reactor 1 and it is removed from the reactor through outlet means 5 and transferred to a separator 12. A relatively small head space 15 of reactor 1 is provided by placing the outlet 5 in the upper part of the reactor.

In separator 12, the lighter soap oil phase rises to the top leaving the aqueous bicarbonate brine at the bottom. The soap oil is discharged by overflow through outlet 11 and sent to the soap oil tank 16, while the brine is removed through brine outlet 10.

The soap oil phase with any remaining brine is then acidulated (not shown in Fig. 1) by reacting the soap oil with a strong acid such as sulfuric acid to free the rest of the tall oil at a pH of 2 to 4.

The tall oil and/or the soap oil may be utilized as fuel as such or it may be converted to various other forms of biofuel mimicking the present day diesel fuels. The tall oil may also be distilled and/or fractionated to provide tall oil fatty acids, tall oil rosin and valuable chemical compounds useful in industrial, pharmaceutical and food compositions.

According to the invention, the tall oil soap neutralization comprises control of the partial pressure of carbon dioxide in the gas phase of the reactor 1. For this purpose, reactor 1 is provided with a gas outlet 7 for the removal of gases from the reactor. In an embodiment of the invention a gas pipe connected to outlet 7 is provided with a valve 9 which is opened, shut or adjusted in response to monitoring means 8.

Monitoring means 8 may include a timer which opens and shuts the valve 9 at certain intervals, allowing gases collected in the head space 15 of the reactor to escape from the reactor, thus allowing more carbon dioxide to enter and to increase the partial pressure of carbon dioxide. An easy way of ascertaining that the carbon dioxide partial pressure is maintained, is to set the timer to open the valve completely or partially at intervals. A typical gas release interval may range from a few minutes to hours. However, a more uniform gas composition and hence a more uniform reaction product is provided by frequent releases of gas. Thus, intervals between 5 and 120 minutes are preferred. A typical interval would be between 15 and 60 minutes. The valve 9 may of course also be manually operated, e.g. in response to a measured or visual observation of the process.

Another way of monitoring the partial pressure of carbon dioxide is by monitoring the pH of the reaction mixture in the neutralization. The target ph is typically between pH 7.5 and 7.8. When the pH of the mixture of soap oil and bicarbonate starts rising above the target value, this is an indication that the neutralization reaction is not operating optimally and that the carbon dioxide partial pressure is too low. This is thus a sign that accumulated gases should be removed to provide space for more carbon dioxide rich gas.

In a more sophisticated embodiment of the invention, the monitoring means 8 is operated in response to a measurement of the gas composition in the head space. The monitoring may be based on measuring the percentage of carbon dioxide in the gas. However, it is also possible and sometimes easier to analyze and measure another significant gas component such as hydrogen sulfide, which is typically the most abundant one of the mal-odorous gases released into the head space 15. Means for analyzing the content of various gases in a gas mixture are commercially available and well known to those skilled in the art.

The monitoring means 8 can be set e.g. to open the valve 9 at a predetermined concentration of a certain gas, such as a maximum level of hydrogen sulfide or a minimum concentration of carbon dioxide.

The composition of the gas in the reactor will vary with the quality of the tall oil soap and the carbon dioxide introduced into the reactor. Knowing the exact composition of the gas mixture in the reactor is not necessary. It is sufficient to know the approximate carbon dioxide content of the gas, since the tolerances are not strict. Typically it is sufficient to monitor the gas phase to ascertain that the content of gases other than carbon dioxide is maintained below a maximum value, which may be set at, for instance 75%. The minimum level of carbon dioxide may also be lower than 25%, but this will significantly slow down the reaction. Preferably, the content of non-carbon dioxide gases should be below 60%. In most cases it is advantageous to keep the content of other gases than carbon dioxide at a level of between 10 and 50% and thus the carbon dioxide content at 90 to 50%, the percentages being calculated on the volume of the gas.

Maintaining the partial pressure of carbon dioxide in the reactor above a minimum level by removal of gases collected in the gas phase of the reactor is not the only way of operating the invention, although it is typically the least complicated one. Other means of controlling the carbon dioxide content include use of purified reactants (soap and carbon dioxide), chemical binding of the released gases, etc.

When the partial pressure control is performed by removal of gases, it is inevitable that also carbon dioxide exits the reactor when the non-desired gas components are removed. In order to utilize the carbon dioxide content of the removed gases, the discharged gas flow may be conveyed to a tall oil soap treatment step preceding the neutralization reaction. Adding the carbon dioxide containing gas e.g. to a tank of crude soap is highly advantageous. The carbon dioxide will be consumed in the soap pre-treatment and a correspondingly lower amount of carbon dioxide will be needed in the neutralization reactor. Moreover, the carbon dioxide may be used for the additional benefit of cleaning the soap in the manner described in US patent 6,172,183 (AGA).

The gas removed from the head space 15 of the reactor 1 and/or from a pre-treatment step, such as the one mentioned above, is preferably sent to scrubbing and/or combustion, as is typically done with other mal-odorous gases in a paper mill.

In an embodiment of the present invention, the reactor 1 and the separator 12 are interconnected not only via outlet means 5 for the mixture of soap oil and brine but also by a gas connection 14. In a preferred embodiment, the head space 13 of the separator is in gas connection with the head space 15 of the reactor. The gas connection 14 between the two head spaces ascertains the maintenance of the same pressure in the reactor and separator. Moreover, since the gas phase of the separator is maintained in gas flow contact with the gas phase of the reactor, the partial pressure of carbon dioxide in the reactor and separator will be at substantially the same level. This will significantly improve the separation of the soap oil and brine in the separator.

It is to be noted that the prior art has taught performing the neutralization reaction and the separation at the same pressure, meaning at the same total gas pressure, in order to improve the separation. In the present invention the reactor and separator are not only at the same pressure. Their gas phases are interconnected and thus the carbon dioxide has substantially the same partial pressure in the rector and separator. This has been found to be of importance since this precludes excess escape of carbon dioxide from the reaction mixture when it is transferred to the separator.

In the prior art, non-carbon dioxide gases accumulated in the reactor with the effect of reducing the carbon dioxide partial pressure. In the separator, however, there was no significant accumulation of other gases in the head space. This allowed more carbon dioxide to escape from the reaction mixture into the gas phase of the separator. Escape of carbon dioxide increased the turbulence of the mixture and counter-acted the separation.

In the present invention, when the reactor and separator are in gas flow contact, the problem caused by the gas release is avoided. There is no significant difference in the carbon dioxide partial pressure. The flow of the oil/brine mixture is laminar and the separation operates in an improved manner. The result is that the soap oil provided according to the invention contains less brine, is cleaner and has a higher dry substance content than that of comparable prior art process. A consequence of the improved process is that there is reduced consumption of energy in the heating for the cooking step and the consumption of sulphuric acid in the cooking is reduced.

Despite a gas flow connection between the reactor and the separator, the carbon dioxide partial pressure in the present process will tend to be slightly higher in the separator than in the reactor. A slight difference in partial pressure does not harm the separation. However, foaming in the separator due to gas release should be avoided in the invention. If needed, the pressure difference may be reduced by providing a gas circulation between the reactor and separator.

In another embodiment than that shown in Fig. 1, the reactor and separator are provided in the same vessel with only a partition wall between them. The discharge of soap oil/brine may be provided by overflow from the reactor part to the separator part and the head space is common for both parts thus providing the same partial pressure in the reaction and separation. In this second embodiment, the inlets and the other outlets, except outlet 5, correspond to those shown in Fig. 1.

The present invention is based on the active utilization of partial pressure control in a process for neutralizing tall oil soap with carbon dioxide. The process provides improvements in the process itself as well as in the product(s) obtained from the process.

In the present specification and claims, the term "tall oil soap" refers to a mixture of saponified fatty acid glycerides/resin acids and black liquor which has been recovered from black liquor in a Kraft pulping process. The pH of the alkaline liquor is typically 10-13 and the soaps are typically sodium salts of said acids. Crude tall oil soap also contains lignin and other impurities deriving from the digestion of the wood.

The term "neutralization" as used herein refers to a partial acidification of the alkaline tall oil soap to a substantially neutral pH (pH 6-8.5). The preferred neutralization according to the invention is performed with gaseous carbon dioxide or a solution of carbon dioxide in water. The typical pH after neutralization is between 7 and 8.

The term "soap oil" as used herein refers to an oil phase of neutralized tall oil soap. The soap oil is the oil phase obtained after the neutralization and after separation of the aqueous brine phase. The term "soap oil" typically also includes some rest brine even when this is not expressly stated. The phase separation may be facilitated by the use of pressure and/or by the addition of various phase separation aids to the mixture.

The term "bicarbonate brine" as used herein refers to the aqueous bicarbonate phase generated in the neutralization. The brine or a major part thereof is separted from the soap oil and removed in the separator.

The term "partial pressure" refers to the volume fraction of a gas component in a mixture of gases. The fact that the gases in the present invention are not ideal gases can be ignored. Thus, the partial pressure of a gas in a mixture is equal to the pressure it would exert if it occupied the same volume alone at the same temperature.

The following examples serve to illustrate the invention.

### Example 1 (reference)

In a tall oil plant, crude tall oil soap from a Kraft pulping process is continuously fed into the bottom part of a neutralisation reactor together with a 1:1 amount of water. Industrial carbon dioxide gas containing 99% carbon dioxide is bubbled in through the bottom of the reactor. The amount of carbon dioxide is adjusted to provide an overpressure of 2 bar. Steam is injected into the reactor to provide a temperature of between 48 and 52 °C. The target pH of the mixture in the upper part of the reactor is 7.5.

The reaction mixture is discharged by overflow and transferred to a separator operating at a pressure of 2 bar. Soap oil is recovered as an overflow from the separator.

After 48 hours of operation, the consumption of carbon dioxide has sunk substantially although the pressure is maintained at 2 bar. The pH of the mixture at the top of the reactor has risen to pH 8.3. The separation in the separator is poor and the soap oil contains an abundance of brine. When sulphuric acid is added to the separated soap oil for the cooking step, there is tremendous foaming. The consumption of sulphuric acid is 85% of that required to cook the same amount of crude soap without a neutralization step.

A sample of the gas in the head space of the reactor is analyzed and is found to contain only 25 vol.% carbon dioxide.

### Example 2 (reference)

In an attempt to improve the process of Example 1, the overpressure in the reactor is gradually increased.

When the pressure is increased, the pH initially drops to pH 7.7. However, 24 h later the pH has again risen to pH 8 although the pressure is at an overpressure of 8 bar. The separation is not efficient and the consumption of sulphuric acid in the final acidulation to tall oil is 75 % of that required without a carbon dioxide neutralization.

### Example 3 (invention)

The operation of Example 1 is repeated with the difference that the reactor is provided with a gas outlet and an adjustable valve for outlet of gas from the head space of the reactor. A timer is set to open the valve for 3 minutes with 30 minute intervals allowing accumulated gases to flow out from the reactor.

The pressure is maintained at 2 bar and the carbon dioxide consumption remains fairly constant with peaks noted at and after each gas release phase. After 48 hours of operation, the mixture at the top of the reactor has a pH of 7.5. The separation of soap oil and brine is good and clear. In the subsequent cooking of the soap oil with sulphuric acid, there is only controlled foaming and the consumption of sulphuric acid is 45 % of that required to cook the same amount of soap without a neutralization stage.

A sample of the gas in the head space of the reactor is analyzed and is found to contain 85 vol.% carbon dioxide.

## Claims

1. A continuous process for neutralizing tall oil soap comprising the steps of
a) feeding tall oil soap, water and carbon dioxide into a reactor;
b) causing a reaction between said soap, carbon dioxide and water to provide a mixture of soap oil and aqueous bicarbonate brine,
c) during said reaction, controlling the partial pressure of carbon dioxide in the gas phase of said reactor; and
d) discharging said mixture of soap oil and brine from said reactor.

2. The process according to claim 1, wherein an overpressure is maintained in said reactor and said overpressure comprises an overpressure of more than 0.2 bar, or an overpressure between 0.5 and 10 bar, or between 1 and 5 bar.

3. The process according to claim 1 or 2, wherein said controlling of said partial pressure comprises continuous and/or intermittent controlled removal of gases from the gas phase of said reactor.

4. The process according to any one of claims 1 to 3, wherein said controlling includes removal of gaseous carbon dioxide from said reactor.

5. The process according to any one of the preceding claims, wherein controlling said partial pressure comprises monitoring the concentration of carbon dioxide or another gas in said gas phase and/or monitoring the pH of said reaction mixture.

6. The process according to claim 3, 4 or 5, wherein the content of gases other than carbon dioxide in said gas phase is monitored and maintained below 75%, or below 60%, or between 10 and 50% calculated on the volume of the gas.

7. The process according to any one of claims 3 to 6, wherein said removed gas is conveyed to a tall oil soap treatment step preceding said neutralization reaction.

8. The process according to any one of the preceding claims, wherein said mixture of soap oil and bicarbonate brine is transferred to a separator in which brine is separated from soap oil, and wherein the gas phase of said separator is maintained in gas flow contact with the gas phase of said reactor.

9. The process according to claim 8, wherein the partial pressure of carbon dioxide in said separator is maintained at the same level as in said reactor.

10. The process according to any one of the preceding claims, wherein said soap oil is acidified with a strong acid to provide tall oil and the tall is optionally processed into products selected from fuel, fatty acids, rosins and chemicals for industrial, pharmaceutical and food compositions.

11. An apparatus for the continuous neutralization of tall oil soap, comprising
(i) a reactor (1) with means for maintaining a pressure
(ii) said reactor having
- controlled inlet means (2, 3, 4) for tall oil soap, water and carbon dioxide
- outlet means (5) for the discharge of a mixture of soap oil and bicarbonate brine, and
- mixing means (6); and
(iii) said reactor being provided with means (7) for controlling the partial pressure of carbon dioxide in the head space (15) of said reactor (1).

12. The apparatus of claim 11, wherein said means for controlling the partial pressure comprises a controlled outlet (7, 8, 9) for the removal of gases from the head space (15) of said reactor (1).

13. The apparatus of claim 12, wherein said gas outlet (7) is provided with means (8) for monitoring the partial pressure of said carbon dioxide and means (9) for continuously and/or intermittently removing gas from the head space (15) of said rector(1).

14. The apparatus of claim 11, 12 or 13, wherein said outlet means (5) for said mixture is connected to a separator (12) having its head space (13) in gas connection with the head space (15) of said reactor (1).

15. Use of partial pressure control in a process for neutralizing tall oil soap with carbon dioxide, which comprises reacting tall oil soap with carbon dioxide and water in a reactor and continuously and/or intermittently removing gases collected in the gas phase of said reactor for maintaining the partial pressure of carbon dioxide in said reactor above a minimum level.
